# EUROPEAN PATENT SPECIFICATION

(11) **EP 3 086 448 B1**
(45) Date of publication and mention of the grant of the patent: **03.08.2022**
(21) Application number: 16166472.7
(22) Date of filing: 21.04.2016
(51) Int. Cl.: H02K 11/40

(54) **GROUNDING DEVICE FOR ELECTRIC MACHINE AND METHODS OF ASSEMBLING THE SAME**
ERDUNGSVORRICHTUNG FÜR ELEKTRISCHE MASCHINE UND VERFAHREN ZUR MONTAGE DAVON
DISPOSITIF DE MISE À LA TERRE POUR MACHINE ÉLECTRIQUE ET PROCÉDÉS D'ASSEMBLAGE DE CELUI-CI

(30) Priority: 22.04.2015 US 201562151217 P; 04.06.2015 US 201514730911
(43) Date of publication of application: 26.10.2016
(73) Proprietor: Regal Beloit America, Inc., Beloit, WI 53511 (US)
(72) Inventor: POST, Steven W., Beloit, Wisconsin 53511 (US); VATKAR, Shirish M., Beloit, Wisconsin 53511 (US); HENRY, Joseph A., Beloit, Wisconsin 53511 (US); SMITH, Michael D., Beloit, Wisconsin 53511 (US); MUEHLBAUER, Gerald R., Beloit, Wisconsin 53511 (US)
(74) Representative: South, Nicholas Geoffrey

(56) References cited:
- EP-A1- 1 460 885
- EP-A2- 1 755 207
- EP-A2- 2 075 820
- EP-A2- 2 779 378
- DE-U1-202014 105 015
- JP-A- 2005 215 311
- US-A- 4 701 653
- US-A- 5 794 100
- US-A1- 2010 001 602

## Description

### BACKGROUND OF THE INVENTION

The field of the invention relates generally to grounding devices and, more particularly, to grounding devices for electric machines having stray electrostatic charges on a rotatable shaft.

At least some known electric machines, such as brushless alternating current (BLAC) permanent magnet motors, are driven by pulse width modulation (PWM) technology and create a capacitance charge between the coils and the rotor. This capacitance charge results in substantially induced currents in the motor shaft.

Other known electric machines such as three-phase motors are driven by variable speed drives that induce a voltage or electrostatic charge on the motor shaft. Some variable speed drives utilize pulse width modulation technology to vary the speed of AC motors, which allows use of less expensive AC motors in applications where more expensive DC motors are used. A drawback of the use of AC motors with variable speed drives is that higher common mode voltage (CMV) is generated by the variable speed drive, which may increase induced currents on the shaft.

In some known motors, voltage or charges on the motor shaft induces current flow through the shaft bearings to the motor frame and then to ground. While the motor is running, the bearings become more resistive to current flow, causing a buildup of charge on the shaft surfaces. Over a short period of time, electrical charges can build up to a high level. As the electrical charges pass the threshold level of the least electrically resistant path, such as through the ball bearings on the shaft, a discharge of electrical energy passes through the least resistant path. This discharge causes electric discharge machining, which can affect the surfaces of the bearing races and the balls in the bearing if the least resistant path is through the bearings. This discharge may create fusion craters, and particulate matter from the crater formation may remain inside the sealed bearing. Both the fusion crater and the particulate material in the bearing act to disturb the free flow rotation of the bearing, which may reduce the operating lifetime of the bearing and/or the electric machine.

A number of mitigation technologies have been used to overcome this problem. The technologies include conductive bearing grease, insulating the bearings, and using various brushes made of metal or other materials to ground the shaft. Such brushes are typically mounted in rigid holders and may be expensive and require lengthy installation procedures. Moreover, the brushes are mounted to the exterior of the motor and therefore exposed to the environment surrounding the motor.

EP2075820 A2 discloses an X-ray tube including: a rotary anticathode having a rotary anticathode part and a shaft part; an anticathode accommodating case including an air-tight case part for keeping an area surrounding the rotary anticathode part in a vacuum atmosphere, and a journaling case part for rotatively supporting the shaft part via a bearing; and an electric motor to rotatably drive the anticathode. In the X-ray tube, an insulating bearing and a conductive fiber brush having a large number of conductive microfibers serving as slide-contacting brush is arranged between opposing peripheral surfaces of the journaling case part of the anticathode accommodating case and the shaft part of the rotary anticathode, such that current is flown from the rotary anticathode to the anticathode accommodating case via the conductive fiber brush.

JP 2005/215311 A discloses an electrophotographic photoreceptor provided with a cylindrical conductive base body and a resin flange engaged with the interior of an aperture end of the base body and supported by a conductive center shaft, and including a conductive member coming into contact with the inner peripheral surface of the base body and the center shaft and separately independent of the resin flange in the base body.

### BRIEF DESCRIPTION OF THE INVENTION

In a first aspect, the disclosure provides a grounding device for an electric machine having a rotating component and a stationary component, according to claim 1.

In a second aspect, the disclosure provides an electric machine according to claim 5. The electric machine includes a rotating component, a stationary component coupled to a ground, and a grounding device, according to claim 1, conductively coupled between the rotating component and the stationary component.

In an unclaimed example, a method of assembling an electric machine is provided. The method includes providing a rotating component, coupling a stationary component to a ground, and positioning a grounding device between the rotating component and the stationary component. The grounding device includes a core and a plurality of conductive fibers coupled to the core and extending therefrom. At least a portion of the plurality of conductive fibers are configured to electrically couple the rotating component with the stationary component such that an electrostatic charge on the rotating component is directed through the plurality of conductive fibers to the stationary component.

### BRIEF DESCRIPTION OF THE DRAWINGS

FIG. 1 is a cross-sectional side view of an exemplary electric machine.
FIG. 2 is an exploded view of selected components of the electric machine shown in FIG. 1.
FIG. 3 is a top view of an exemplary grounding device that may be used with the electric machine shown in FIG. 1.
FIG. 4 is a perspective view of the grounding device shown in FIG. 3.
FIG. 5 is a cross-sectional side view of another suitable embodiment of an electric machine having a grounding device.
FIG. 6 is an exploded view of the electric machine shown in FIG. 5.
FIG. 7 is a cross-sectional side view of an unclaimed example of an electric machine having a grounding device.
FIG. 8 is an exploded view of selected components of the electric machine shown in FIG. 7.

### DETAILED DESCRIPTION OF THE INVENTION

Electrostatic charges are likely to build on rotating components of electric machines. These charges often travel through the bearings used to support the rotating parts of the machines and reduce the operating lifetime of the bearings. Grounding devices may be used to bleed the electrostatic charge to a ground. One such grounding device includes a core and a plurality of conductive fibers coupled to the core such that the fibers extend therefrom. The plurality of conductive fibers are configured to electrically couple the rotating component with a stationary component of the electric machine such that the electrostatic charge on the rotating component is directed through the plurality of conductive fibers, to the stationary component, and to the ground. As such, the grounding device described herein substantially prevents bearing arcing and increases the service lifetime of the electric machine.

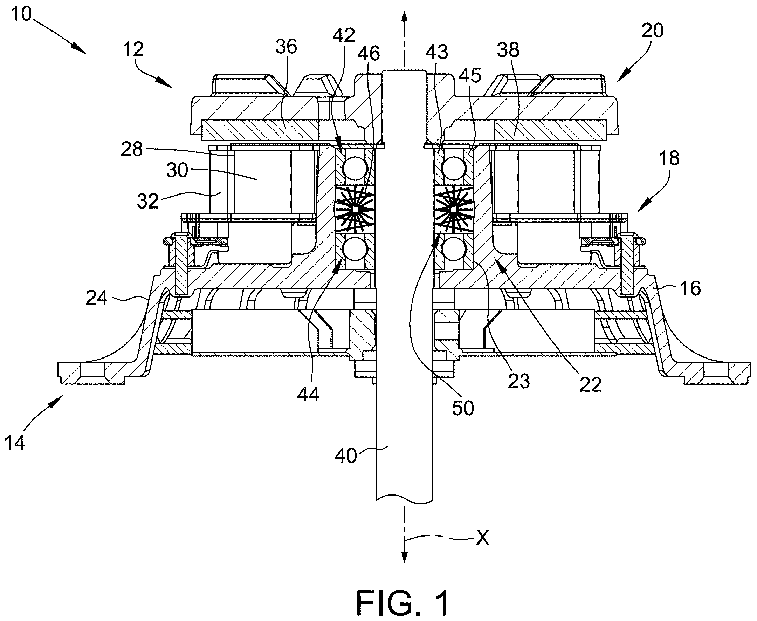

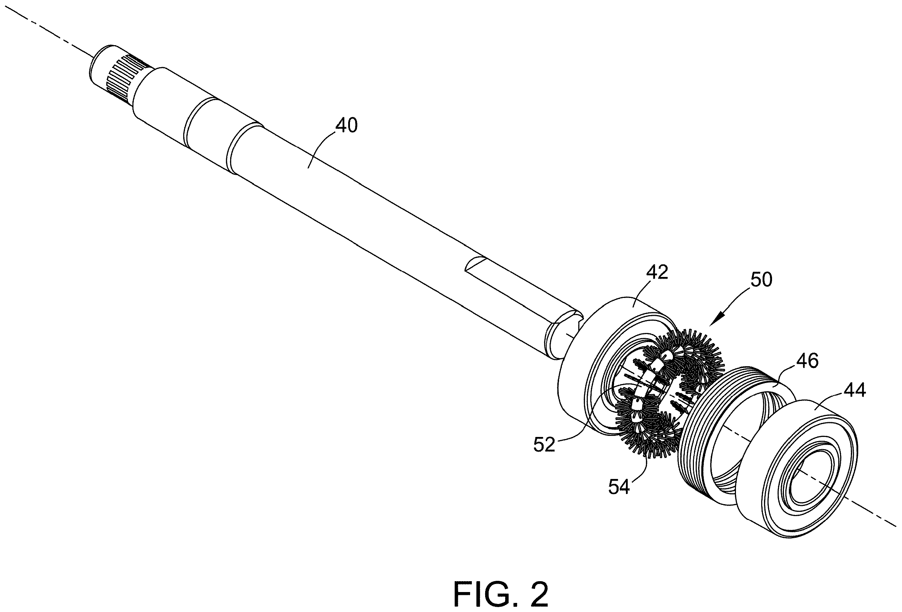

FIG. 1 is a cross-sectional side view of an exemplary electric machine 10 that may be operated as either a generator or a motor. FIG. 2 is an exploded view of selected components of electric machine 10. In the exemplary embodiment, electric machine 10 is coupled to a fan or centrifugal blower (not shown) for moving air through an air handling system, for blowing air over cooling coils, and/or for driving a compressor within an air conditioning/refrigeration system. More specifically, machine 10 may be used in air moving applications used in the heating, ventilation, and air conditioning (HVAC) industry, for example, in residential applications using 1/5 horsepower (hp) to 1 hp motors. Alternatively, machine 10 is used in fluid pumping applications. Machine 10 may also be used in commercial and industrial applications and/or hermetic compressor motors used in air conditioning applications, where machine 10 has a rating of greater than 1 hp. Although described herein in the context of an air handling system, electric machine 10 may engage any suitable work component and be configured to drive such a work component.

Electric machine 10 includes a first end 12, a second end 14, and an assembly housing 16. Electric machine 10 also includes a stationary assembly 18 and a rotatable assembly 20. Assembly housing 16 defines an interior 22 and an exterior 24 of machine 10 and is configured to at least partially enclose and protect stationary assembly 18 and rotatable assembly 20. Stationary assembly 18 includes a stator core 28, which includes a plurality of teeth 30 and a plurality of windings 32 wound around stator teeth 30. In the exemplary embodiment, stationary assembly 18 is a three-phase stator assembly and stator core 28 is formed from a stack of laminations made of highly magnetically permeable material. Alternatively, stationary assembly 18 is solid and/or is a single phase stator assembly. Stationary assembly 18 is one of a round, segmented, soft magnetic composite, or roll-up type stator construction and windings 32 are wound on stator core 28 in any suitable manner that enables machine 10 to function as described herein.

Rotatable assembly includes a permanent magnet rotor core 36, having a plurality of permanent magnets 38, and a shaft 40 supported by a first bearing 42 and a second bearing 44. Bearings 42 and 44 are separated by a spring mechanism 46. In the exemplary embodiment, bearings 42 and 44 and spring mechanism 46 are housed in a counter-bore 23 formed in housing 16 and substantially circumscribe shaft 40. In the exemplary embodiment, rotor core 36 is formed from a stack of laminations made of magnetically permeable material. Alternatively, rotor core 36 is a solid core. Rotor core 36 is substantially received in a central bore of stator core 28 for rotation along an axis of rotation X. FIG. 1 illustrates rotor core 36 and stator core 28 as solid for simplicity. While FIG. 1 is an illustration of a three-phase electric machine, the methods and apparatus described herein may be included within machines having any number of phases.

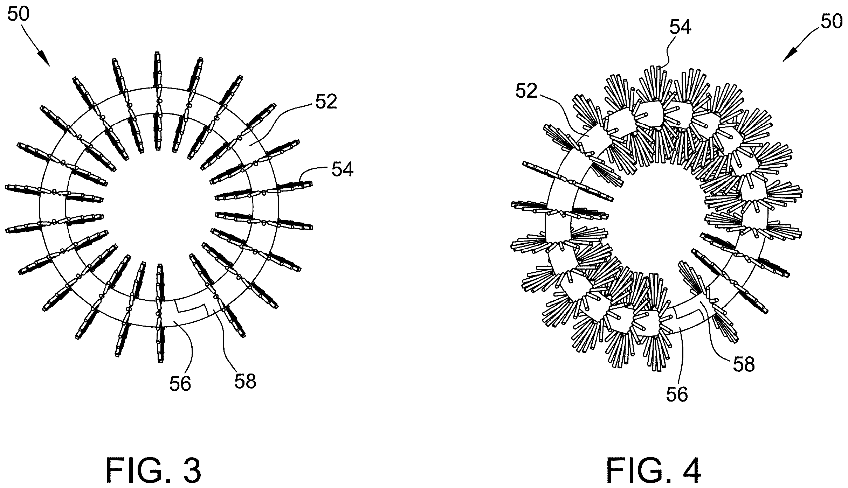

FIG. 3 is a top view of a grounding device 50 according to the invention that may be used with electric machine 10 (shown in FIG. 1). FIG. 4 is a perspective view of grounding device 50. In the exemplary implementation, as shown in FIG. 1, grounding device 50 positioned about shaft 40 and generally includes a core 52 and a plurality of semi-conductive or conductive fibers 54 extending therefrom. In the exemplary embodiment, grounding device 50 is rotatably stationary and in conductive contact with and/or grounded to a non-rotating component of electric machine 10, such as housing 16. Alternatively, grounding device 50 contacts any non-rotating component of machine 10 that enables grounding device 50 to function as described herein. For example, grounding device 50 may be positioned to a machine bracket (not shown), machine foot (not shown), bearing bore (not shown), machine frame (not shown), spring 46, and/or stator core 28.

According to the invention, core 52 includes a first end 56 and a second end 58 and is formed from an electrically conductive wire. For example, core 52 is fabricated from steel, copper, brass, and/or other metals. Alternatively, core 52 is fabricated from an electrically non-conductive material, such as, but not limited to, plastic. Generally, core 52 is formed from any suitable material that enables grounding device 50 to function as defined herein. In the exemplary embodiment, core 52 is fabricated from a formable material and is curved to form a loop such that ends 56 and 58 are coupled together. In an unclaimed example, core 52 is a continuously-formed circular ring that does not include ends 56 and 58. Although grounding device 50 is shown as a substantially circular loop in the accompanying figures, it is understood that grounding device 50 may also be arc-shaped, that is, only a portion of a circle. Additionally, grounding device 50 may include one or more arc-shaped segments or substantially spherical elements. Generally, grounding device 50 has any shape that enables usage as described herein.

In the exemplary embodiment, fibers 54 are electrically conductive fibers that relay current build up from a rotating portion of machine 10 to a ground. For example, fibers 54 are fabricated from steel, copper, brass, and/or other metals. Alternatively, fibers 54 are fabricated from a non-conductive material and include a conductive coating, such as carbon fiber or copper. Generally, fibers 54 are fabricated from any suitable flexible, electrically conductive or semi-conductive material that enables grounding device 50 to function as described herein. For example, fibers 54 are fabricated from copper and/or carbon fiber.

In an example that is not part of the invention, fibers 54 are spirally wound on core 52 and may have any suitable length. Alternatively, fibers 54 are coupled to core 52 in any suitable pattern that enables grounding device 50 to function as defined herein. In an embodiment according to the invention, fibers 54 extend approximately 360° about core 52. In an alternative embodiment, fibers 54 extend approximately 180° about core 52. In yet another alternative embodiment, fibers 54 extend between approximately 60° and approximately 90° about core 52. However, fibers 54 may extend about core 52 in any suitable pattern that enables grounding device 50 to function as described herein.

As shown in FIG. 1, grounding device 50 is positioned about shaft 40 in counter-bore 23 within housing interior 22 such that grounding device 50 is contained within electric machine 10 and is not exposed to the surrounding environment. As such, grounding device 50 is not exposed to moisture or particulate matter (dust, dirt, debris) that may reduce the service lifetime of grounding device 50. More specifically, grounding device 50 is positioned between bearings 42 and 44 and substantially radially inward of spring mechanism 46. Grounding device 50 is positioned such that at least a portion of the plurality of fibers 54 contact both shaft 40 and housing 16. Specifically, at least a portion of fibers 54, such as fibers 54 on a radially outward portion of grounding device 50, extend through, and contact, spring mechanism 46 and also contact housing 16. Alternatively, grounding device 50 is positioned about shaft 40 such that at least a portion of the plurality of fibers 54 are within a close proximity of shaft 40 such that an electrostatic charge on shaft 40 can be electrically discharged to fibers 54 (i.e., fibers 54 are electrically coupled to shaft 40, but not in direct contact with shaft 40). Alternatively, at least a portion of fibers 54 are in contact with any rotating component of electric machine 10. For example, fibers 54 may contact a surface of rotor core 36, rotor end rings (not shown), and/or a fan or hub (not shown) mounted to shaft 40. Generally, grounding device 50 is positionable within electric machine 10 in any suitable location that enables grounding device 50 to bleed an electric charge from a rotating component to a grounding component.

In operation of electric machine 10, an electrostatic charge is produced on a rotating component of electric machine, such as shaft 40. Grounding device 50 is positioned within counter-bore 23 such that fibers 54 contact shaft 40. Electrically conductive fibers 54 facilitate bleeding the electrostatic charge from shaft 40, through fibers 54, and to housing 16. Housing 16 one of serves as the ground or is electrically coupled to a ground and effectively transfers the electrostatic charge out of electric machine 10 to the ground. In operation, fibers 54 proximate shaft 40, on a radially inner portion of grounding device 50, conduct the electrostatic charge from shaft 40 and transfers the charge into fibers 54 proximate housing 16, on a radially outer portion of grounding device. As such, the plurality of conductive fibers 54 are operable to both conduct the electrostatic charge away from the rotating component of electric machine 10, and to ground the charge by contacting a stationary component of electric machine 10. Furthermore, because at least one of fibers 54 contacts both spring mechanism 46 and housing 16, the electrostatic charge is grounded through both of these components. As such, grounding device 50 grounds the electrostatic charge from shaft 40 through the plurality of conductive fibers 54 rather than through core 52. In embodiments where core 52 is electrically conductive, at least a portion of the electrostatic charge is conducted through core 52 between the radially inner fibers 54 and radially outer fibers 54. In embodiments where core 52 is electrically non-conductive, the electrostatic charge travels through only fibers 54 to transfer the charge into housing 16.

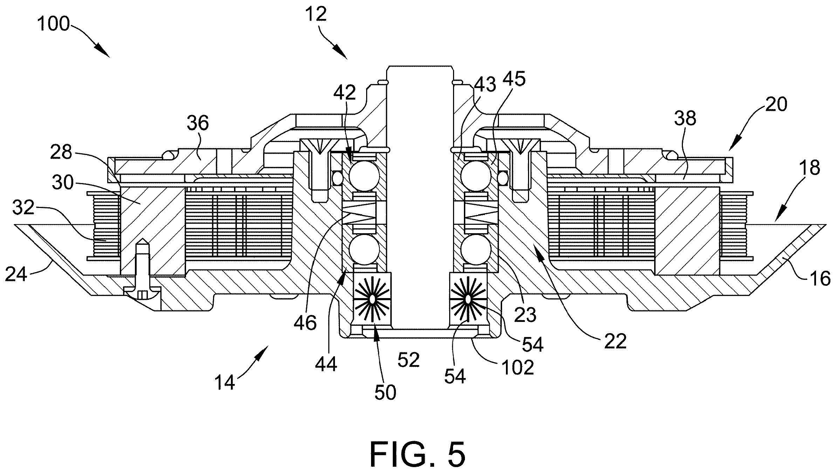

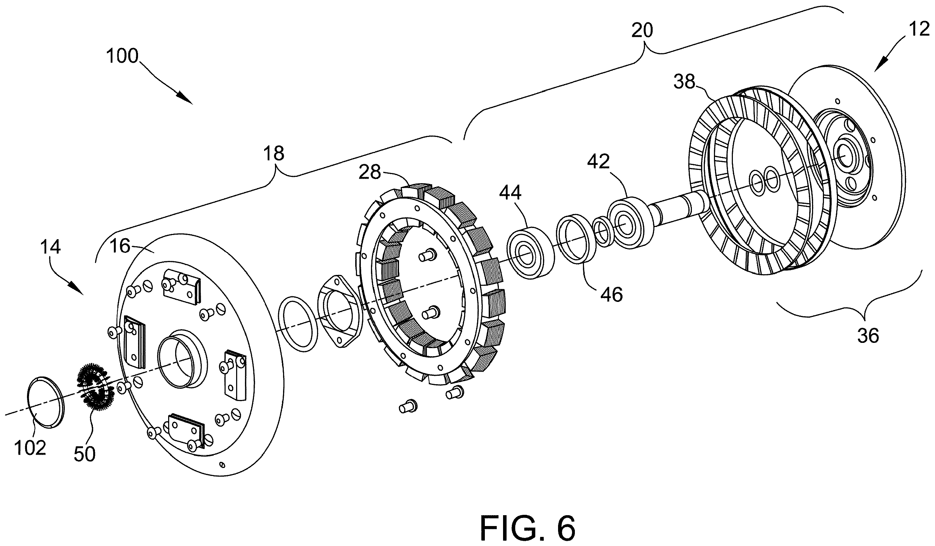

FIG. 5 is a cross-sectional side view of another suitable embodiment of an electric machine 100 having grounding device 50, and FIG. 6 is an exploded view of electric machine 100. Electric machine 100 is substantially similar to electric machine 10 (shown in FIG. 1) in operation and composition, with the exception that electric machine 100 does not include a shaft and grounding device 50 is positioned proximate the second end 14 of machine 100 outward from bearings 42 and 44. As such, grounding device 50 is not positioned between bearings 42 and 44 in electrical machine 100. Although FIG. 5 illustrates grounding device 50 positioned outward from bearings 42 and 44, such that bearings 42 and 44 are between grounding device 50 and rotating assembly 20, grounding device 50 may also be positioned inward of bearings 42 and 44 such that bearings 42 and 44 are positioned between grounding device 50 and stationary assembly 18. In one embodiment, grounding device 50 contacts one bearing 42 (FIG. 5) or both bearings 42 and 44 (FIG. 1). Alternatively, grounding device 50 does not contact either of bearings 42 or 44. In the embodiment shown in FIGS. 5 and 6, electric machine 100 also includes a dust cap 102 coupled to housing 16 at second end 14. Dust cap 102 prevents or at least substantially reduces an amount of particulate matter and moisture from entering housing interior 22 and collecting proximate grounding device 50.

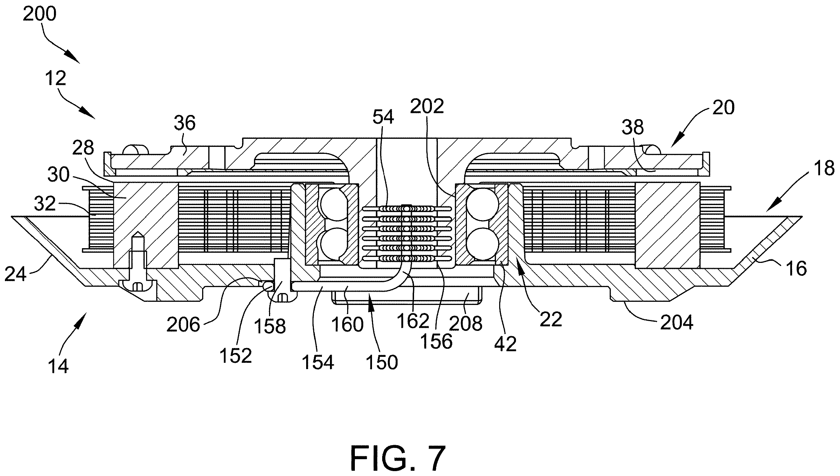

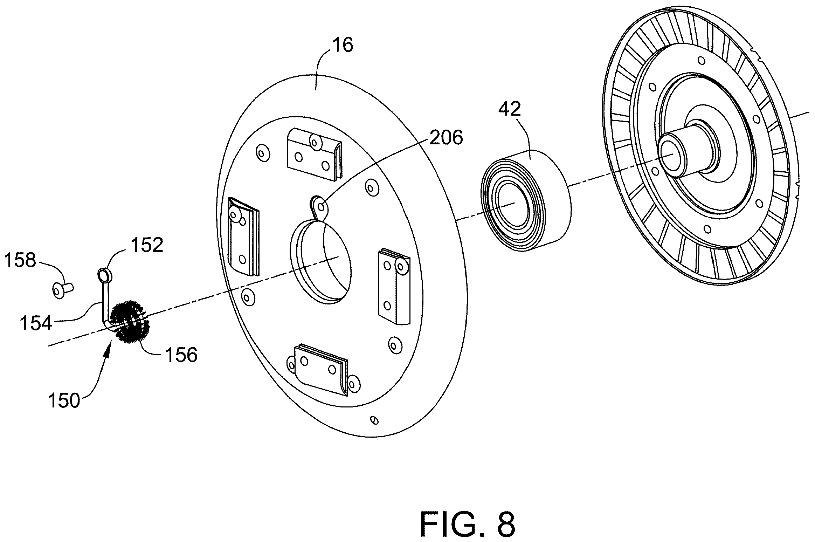

FIG. 7 is a cross-sectional side view of another unclaimed example of an electric machine 200 having a grounding device 150, and FIG. 8 is an exploded view of selected components of electric machine 200. Electric machine 200 is substantially similar to electric machine 100 (shown in FIG. 5) in operation and composition, with the exception that electric machine 200 includes only a single bearing 42 and no spring mechanism. Furthermore, in electric machine 200, grounding device 150 is positioned within a central opening 202 defined by rotor core 36.

In the unclaimed example shown in FIGS. 7 and 8, grounding device 150 includes an eye 152, a core 154 extending from eye 152, and a plurality of fibers 156 extending from an end of core 154. Core 154 and fibers 156 are both formed from an electrically conductive material. For example, core 154 and fibers 156 are fabricated from steel, copper, brass, and/or other metals. Alternatively, core 154 and fibers 156 are fabricated from a non-conductive material and include a conductive coating, such as carbon fiber or copper. Generally, fibers 156 are fabricated from any suitable flexible, electrically conductive or semi-conductive material that enables grounding device 150 to function as described herein. In the example shown in FIGS. 7 and 8, core 154 includes a first portion 160 coupled to housing 16 and a second portion 162 that extends into central opening 202 such that portions 160 and 162 are perpendicular to each other. Fibers 156 extend from second portion 162 within opening 202.

A fastener 158 is used to couple grounding device 150 to an exterior surface 204 of housing 16. Specifically, surface 204 includes a groove 206 that receives at least one of eye 152 and first portion 160 of core 154. Fibers 156 extend perpendicularly from second portion 162 of core 154 into central opening 202 of rotor core 36. Similar to electric machine 100, electric machine 200 also includes a dust cap 208 that substantially covers opening 202.

In operation of electric machine 200, an electrostatic charge is produced on a rotating component of electric machine 200, such as rotor core 36. Grounding device 150 is positioned within electric machine 200 such that fibers 156 contact the portion of rotor core 36 that forms central opening 202. Electrically conductive fibers 156 facilitate bleeding the electrostatic charge from rotor core 36 into housing 16. Housing 16 may be electrically coupled to a ground and effectively transfers the electrostatic charge out of electric machine 10 to the ground.

Described herein is a grounding device for an electric machine having a rotating component and a stationary component. The grounding device includes a core and a plurality of conductive fibers coupled to the core and extending therefrom. The plurality of conductive fibers are configured to electrically couple the rotating component with the stationary component such that an electrostatic charge on the rotating component is directed through the plurality of conductive fibers to the stationary component.

The core and the plurality of conductive fibers are coupled between a pair of bearings and radially inward of a spring mechanism such that at least one conductive fiber of the plurality of conductive fibers extends through the spring mechanism and is electrically coupled with a stationary component.

The core comprises a first portion coupled to the stationary component and a second portion positioned within an opening defined by the rotating component. The plurality of conductive fibers are coupled to the second portion.

The plurality of conductive fibers are at least one of acrylic fibers, copper fibers, and carbon fibers.

The plurality of conductive fibers comprise a conductive copper coating.

The core is fabricated from an electrically conductive material, such as, but not limited to, copper, brass, and any metallic material.

The core is fabricated from an electrically non-conductive material, such as plastic.

The core comprises at least one of a substantially circular shape, at least one arc-shaped segment, and at least one substantially spherical element.

At least one conductive fiber of the plurality of conductive fibers contacts at least one bearing within the stationary component.

The core and the plurality of conductive fibers are positioned within a counter-bore formed in the stationary component.

At least one of the core and the plurality of conductive fibers is flexible.

Also described herein is an electric machine comprising a rotating component, a stationary component coupled to a ground, and a grounding device conductively coupled between the rotating component and the stationary component. The grounding device comprises a core and a plurality of conductive fibers coupled to the core and extending therefrom. The plurality of conductive fibers are configured to electrically couple the rotating component with the stationary component such that an electrostatic charge on the rotating component is directed through the plurality of conductive fibers to the stationary component.

The rotating component in the above described electric machine includes at least one of a shaft and a rotor core.

The stationary component in the above described electric machine includes at least one of housing and a stator.

The electric machine also includes a first bearing coupled to the rotating component, a second bearing coupled to the rotating component, and a spring mechanism positioned between the first and second bearings.

The grounding device in the above described electric machine is positioned between the first and second bearings and radially inward of the spring mechanism such that at least one conductive fiber of the plurality of conductive fibers extends through the spring mechanism and is electrically coupled with the stationary component.

Alternatively, the grounding device is not positioned between the first and second bearings.

The core is fabricated from an electrically non-conductive material.

The core includes at least one of a substantially circular shape, at least one arc-shaped segment, and at least one substantially spherical element.

Also described herein is a method of assembling an electric machine. The method includes providing a rotating component, coupling a stationary component to a ground, and positioning a grounding device between the rotating component and the stationary component. The grounding device includes a non-conductive core and a plurality of conductive fibers coupled to the core and extending therefrom. At least a portion of the plurality of conductive fibers are configured to electrically couple the rotating component with the stationary component such that an electrostatic charge on the rotating component is directed through the plurality of conductive fibers to the stationary component.

Systems and methods for grounding an electrostatic charge on a rotating component of an electric machine are provided herein. The system includes a grounding device that is coupleable to the electric machine. The device includes a core and a plurality of electrically conductive fibers that bleed the electrostatic charge from the electric machine to a ground. The system is simple, inexpensive, and is quickly and easily installed on various sized electric machines.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims.

## Claims

1. A grounding device (50) for an electric machine (10) having a rotating component (20) and a stationary component (18), said grounding device comprising: a core (52); and a plurality of conductive fibers (54) coupled to said core and extending therefrom such that at least a portion of said plurality of conductive fibers contacts the rotating component (20) and such that at least a portion of said plurality of conductive fibers contacts the stationary component (18), said plurality of conductive fibers configured to electrically couple the rotating component with the stationary component such that an electrostatic charge on the rotating component is directed through said plurality of conductive fibers to the stationary component, **characterised in that** said core includes a first end (56) and a second end (58) and is curved to form a loop or an arc.

2. The grounding device in accordance with claim 1, wherein said core (52) and said plurality of conductive fibers (54) are positioned within a bore formed in the stationary component (18).

3. The grounding device in accordance with claim 1, said core (52) and said plurality of conductive fibers (54) are positioned radially inward of a spring mechanism (46), wherein at least one conductive fiber of said plurality of conductive fibers contacts the spring mechanism and is electrically coupled with the stationary component (18).

4. The grounding device in accordance with claim 1, wherein said core is fabricated from an electrically non-conductive material.

5. An electric machine (10) comprising: a rotating component (20); a stationary component (18) coupled to a ground; and a grounding device (50) according to claim 1 conductively coupled between said rotating component and said stationary component, wherein the plurality of conductive fibers (54) coupled to the core are extending both radially inward from and radially outward from said core.

6. The electric machine in accordance with claim 5, wherein said rotating component (20) comprises at least one of a shaft (40), a bearing inner race, and a rotor core (36).

7. The electric machine in accordance with claim 5, wherein said stationary component (18) comprises at least one of a housing (16), a spring mechanism (46), a bearing outer race, and a stator.

8. The electric machine in accordance with claim 5 further comprising at least one bearing (42, 44) comprising an inner race and an outer race; a housing (16) comprising a bore formed therein, wherein said at least one bearing and said grounding device (50) are positioned within said bore.

9. The electric machine in accordance with claim 8, wherein said grounding device is positioned proximate said at least one bearing such that said plurality of conductive fibers contact said inner race and at least one of said outer race and said housing.

10. The electric machine in accordance with claim 8, wherein said grounding device does not contact said at least one bearing.

11. The electric machine in accordance with claim 5, wherein said core (52) is fabricated from an electrically non-conductive material.

12. The electric machine in accordance with claim 5, wherein said core comprises at least one of a substantially circular shape, at least one arc-shaped segment, and at least one substantially spherical element.

13. The electric machine in accordance with claim 5, wherein said stationary component (18) comprises a bore formed therein, wherein said core (52) and said plurality of conductive fibers (54) are positioned within said bore.

14. The grounding device in accordance with claim 1, wherein said core is formed from a formable material having a first end and a second end.

15. The grounding device in accordance with claim 1, wherein said core comprises an exterior surface, and wherein said plurality of fibers extend 360 degrees about said exterior surface in both an axial direction and a radial direction to surround said core.

## Patentansprüche

1. Erdungsvorrichtung (50) für eine elektrische Maschine (10) mit einem rotierenden Bauteil (20) und einem stationären Bauteil (18), die Erdungsvorrichtung umfassend: einen Kern (52); und eine Vielzahl von leitenden Fasern (54), die mit dem Kern gekoppelt sind und sich so von diesem erstrecken, dass zumindest ein Teil der Vielzahl von leitenden Fasern das rotierende Bauteil (20) kontaktiert, und so, dass zumindest ein Teil der Vielzahl von leitenden Fasern das stationäre Bauteil (18) kontaktiert, wobei die Vielzahl von leitenden Fasern konfiguriert sind, das rotierende Bauteil mit dem stationären Bauteil elektrisch zu koppeln, sodass eine elektrostatische Ladung an dem rotierenden Bauteil durch die Vielzahl von leitenden Fasern zu dem stationären Bauteil geleitet wird, **dadurch gekennzeichnet, dass** der Kern ein erstes Ende (56) und ein zweites Ende (58) beinhaltet und gekrümmt ist, um eine Schleife oder einen Bogen zu bilden.

2. Erdungsvorrichtung nach Anspruch 1, wobei der Kern (52) und die Vielzahl von leitenden Fasern (54) innerhalb einer Bohrung positioniert sind, die in dem stationären Bauteil (18) gebildet ist.

3. Erdungsvorrichtung nach Anspruch 1, wobei der Kern (52) und die Vielzahl von leitenden Fasern (54) radial einwärts von einem Federmechanismus (46) positioniert sind, wobei zumindest eine leitende Faser der Vielzahl von leitenden Fasern den Federmechanismus kontaktiert und elektrisch mit dem stationären Bauteil (18) gekoppelt ist.

4. Erdungsvorrichtung nach Anspruch 1, wobei der Kern aus einem elektrisch nicht leitenden Material hergestellt ist.

5. Elektrische Maschine (10), umfassend: ein rotierendes Bauteil (20); ein stationäres Bauteil (18), das mit Erde gekoppelt ist; und eine Erdungsvorrichtung (50) nach Anspruch 1, die zwischen dem rotierenden Bauteil und dem stationären Bauteil leitfähig gekoppelt ist, wobei sich die Vielzahl von leitenden Fasern (54), die mit dem Kern gekoppelt sind, sowohl radial nach innen als auch radial nach außen von dem Kern erstrecken.

6. Elektrische Maschine nach Anspruch 5, wobei das rotierende Bauteil (20) zumindest eines von einer Welle (40), einem Lagerinnenring und einem Rotorkern (36) umfasst.

7. Elektrische Maschine nach Anspruch 5, wobei das stationäre Bauteil (18) zumindest eines von einem Gehäuse (16), einem Federmechanismus (46), einem Lageraußenring und einem Stator umfasst.

8. Elektrische Maschine nach Anspruch 5, ferner umfassend zumindest ein Lager (42, 44), das einen Innenring und einen Außenring umfasst; ein Gehäuse (16), das eine darin gebildete Bohrung umfasst, wobei das zumindest eine Lager und die Erdungsvorrichtung (50) innerhalb der Bohrung positioniert sind.

9. Elektrische Maschine nach Anspruch 8, wobei die Erdungsvorrichtung so in der Nähe des zumindest einen Lagers positioniert ist, dass die Vielzahl von leitenden Fasern den Innenring und zumindest einen von dem Außenring und dem Gehäuse kontaktieren.

10. Elektrische Maschine nach Anspruch 8, wobei die Erdungsvorrichtung das zumindest eine Lager nicht kontaktiert.

11. Elektrische Maschine nach Anspruch 5, wobei der Kern (52) aus einem elektrisch nicht leitenden Material hergestellt ist.

12. Elektrische Maschine nach Anspruch 5, wobei der Kern zumindest eines von einer im Wesentlichen kreisförmigen Form, zumindest einem bogenförmigen Segment und zumindest einem im Wesentlichen kugelförmigen Element umfasst.

13. Elektrische Maschine nach Anspruch 5, wobei das stationäre Bauteil (18) eine darin gebildete Bohrung umfasst, wobei der Kern (52) und die Vielzahl von leitenden Fasern (54) innerhalb der Bohrung positioniert sind.

14. Erdungsvorrichtung nach Anspruch 1, wobei der Kern aus einem formbaren Material mit einem ersten Ende und einem zweiten Ende gebildet ist.

15. Erdungsvorrichtung nach Anspruch 1, wobei der Kern eine Außenfläche umfasst, und wobei sich die Vielzahl von Fasern sowohl in einer axialen Richtung als auch in einer radialen Richtung um 360 Grad um die Außenfläche erstrecken, um den Kern zu umgeben.

## Revendications

1. Dispositif de mise à la terre (50) pour une machine électrique (10) ayant un composant rotatif (20) et un composant fixe (18), ledit dispositif de mise à la terre comprenant : un noyau (52) ; et une pluralité de fibres conductrices (54) couplées audit noyau et s'étendant à partir de celui-ci de telle sorte qu'au moins une partie de ladite pluralité de fibres conductrices entrent en contact avec le composant rotatif (20) et de telle sorte qu'au moins une partie de ladite pluralité de fibres conductrices entrent en contact avec le composant fixe (18), ladite pluralité de fibres conductrices étant configurées pour coupler électriquement le composant rotatif avec le composant fixe de telle sorte qu'une charge électrostatique sur le composant rotatif est dirigée à travers ladite pluralité de fibres conductrices vers le composant fixe, **caractérisé en ce que** ledit noyau comporte une première extrémité (56) et une seconde extrémité (58) et est incurvé pour former une boucle ou un arc.

2. Dispositif de mise à la terre selon la revendication 1, dans lequel ledit noyau (52) et ladite pluralité de fibres conductrices (54) sont positionnés à l'intérieur d'un alésage formé dans le composant fixe (18).

3. Dispositif de mise à la terre selon la revendication 1, dans lequel ledit noyau (52) et ladite pluralité de fibres conductrices (54) sont positionnés radialement vers l'intérieur d'un mécanisme à ressort (46), dans lequel au moins une fibre conductrice de ladite pluralité de fibres conductrices entre en contact avec le mécanisme à ressort et est couplée électriquement avec le composant fixe (18).

4. Dispositif de mise à la terre selon la revendication 1, dans lequel ledit noyau est fabriqué à partir d'un matériau électriquement non conducteur.

5. Machine électrique (10) comprenant : un composant rotatif (20) ; un composant fixe (18) couplé à une terre ; et un dispositif de mise à la terre (50) selon la revendication 1 couplé de manière conductrice entre ledit composant rotatif et ledit composant fixe, dans laquelle la pluralité de fibres conductrices (54) couplées au noyau s'étendent toutes les deux radialement vers l'intérieur à partir dudit noyau et radialement vers l'extérieur à partir dudit noyau.

6. Machine électrique selon la revendication 5, dans laquelle ledit composant rotatif (20) comprend au moins l'un d'un arbre (40), d'une bague intérieure de palier et d'un noyau de rotor (36).

7. Machine électrique selon la revendication 5, dans laquelle ledit composant fixe (18) comprend au moins l'un d'un logement (16), d'un mécanisme à ressort (46), d'une bague extérieure de palier et d'un stator.

8. Machine électrique selon la revendication 5, comprenant en outre au moins un palier (42, 44) comprenant une bague intérieure et une bague extérieure ; un logement (16) comprenant un alésage formé dans celui-ci, dans laquelle ledit au moins un palier et ledit dispositif de mise à la terre (50) sont positionnés à l'intérieur dudit alésage.

9. Machine électrique selon la revendication 8, dans laquelle ledit dispositif de mise à la terre est positionné à proximité dudit au moins un palier de telle sorte que ladite pluralité de fibres conductrices entrent en contact avec ladite bague intérieure et au moins l'un de ladite bague extérieure et dudit logement.

10. Machine électrique selon la revendication 8, dans laquelle ledit dispositif de mise à la terre n'entre pas en contact avec ledit au moins un palier.

11. Machine électrique selon la revendication 5, dans laquelle ledit noyau (52) est fabriqué à partir d'un matériau électriquement non conducteur.

12. Machine électrique selon la revendication 5, dans laquelle ledit noyau comprend au moins l'un d'une forme sensiblement circulaire, d'au moins un segment en forme d'arc et d'au moins un élément sensiblement sphérique.

13. Machine électrique selon la revendication 5, dans laquelle ledit composant fixe (18) comprend un alésage formé dans celui-ci, dans laquelle ledit noyau (52) et ladite pluralité de fibres conductrices (54) sont positionnés à l'intérieur dudit alésage.

14. Dispositif de mise à la terre selon la revendication 1, dans lequel ledit noyau est formé à partir d'un matériau apte à être moulé ayant une première extrémité et une seconde extrémité.

15. Dispositif de mise à la terre selon la revendication 1, dans lequel ledit noyau comprend une surface extérieure, et dans lequel ladite pluralité de fibres s'étendent sur 360 degrés autour de ladite surface extérieure à la fois dans une direction axiale et une direction radiale pour entourer ledit noyau.
